# EUROPÄISCHE PATENTSCHRIFT

(11) **EP 0 623 566 B1**
(45) Veröffentlichungstag und Bekanntmachung des Hinweises auf die Patenterteilung: **17.07.1996**
(21) Anmeldenummer: 94106763.9
(22) Anmeldetag: 29.04.1994
(51) Int. Cl.: C04B 18/16

(54) **Künstlicher Stein**
Artificial stone
Pierre artificielle

(30) Priorität: 30.04.1993 DE 4314135
(43) Veröffentlichungstag der Anmeldung: 09.11.1994
(73) Patentinhaber: KARL EBERT GmbH BETONSTEINWERKE, D-71686 Remseck (DE)
(72) Erfinder: Hammann, Günther, D-71642 Ludwigsburg (DE)
(74) Vertreter: Dreiss, Uwe, Prof. Dr. jur. Dipl.-Ing. M.Sc.

(56) Entgegenhaltungen:
- EP-A- 0 496 263
- DE-A- 3 608 180
- DATABASE WPI Section Ch, Week 8701, Derwent Publications Ltd., London, GB; Class L02, AN 87-006227 & SU-A-1 234 381 (DON PROMSTROINIIPRO) 30. Mai 1986
- DATABASE WPI Section Ch, Week 8233, Derwent Publications Ltd., London, GB; Class L02, AN 82-70004E & SU-A-874 697 (KHARK CIVIL ENG INS) 23. Oktober 1981
- CONSERVATION & RECYCLING, Bd.10, Nr.2/3, 1987, OXFORD Seiten 53 - 56 VOLKER STEIN 'Recycling of demolition waste and its influence on the market of natural mineral building materials.'
- PATENT ABSTRACTS OF JAPAN vol. 014, no. 306 (C-0735) 3. Juli 1990 & JP-A-02 102 161 (KAWAI KAKEN KOGYO:KK;OTHERS: 01) 13. April 1990
- DATABASE WPI, Section Ch, Week 8233, Derwent Publications Ltd., London (GB); Class L02, AN 82-70004E
- DATABASE WPI, Sektion Ch, Week 8701, Derwent Publications Ltd., London (GB); Class L02, AN 87-006227
- DATABASE WPI, Sektion Ch, Woche 8701, Derwent Publications Ltd., London (GB); Klasse L02, AN 87-006227
- DATABASE WPI, Sektion Ch, Woche 8233, Derwent Publications Ltd., London (GB); Klasse L02, AN 82-70004e
- CONSERVATION & RECYCLING, Band 10, Nr. 2/3, 1987, Oxford (GB); V. STEIN, Seiten 53-56
- PATENT ABSTRACTS OF JAPAN, Band 104, Nr. 306 (C-0735), 03 Juli 1990 & JP-A-02102161

## Beschreibung

Die Erfindung betrifft einen künstlichen Stein aus mittels Zement gebundenem, im wesentlichen körnigem Material.

Erfindungsgemäß ist vorgesehen, daß das Material bis zur Höhe von mindestens 70% des Steins aus Bauschutt besteht, aus dem Holz, Kunststoffe und Metalle aussortiert sind, und der auf eine Korngröße bis zu 15 mm gebrochen ist, und daß das Material im Bereich der restlichen Höhe des Steins einschließlich der Ansichtsfläche keinen Bauschutt enthält.

Auf diese Weise wird die Aufgabe gelöst, Bauschutt zu recyceln. Das Material dieses künstlichen Steins kann, wenn es wieder als Bauschutt anfällt, erneut recycelt werden. Gleichzeitig entsteht damit ein künstlicher Stein ausreichender Festigkeit, der im Vergleich zu gleichwertigen Steinen bekannter Art erheblich billiger ist. Die Erfindung geht also sehr viel weiter als dem nicht-recycelten Material lediglich in kleineren Anteilen recyceltes Material beizumischen, sondern verwendet - von einem geringfügigen Anteil zum Ausgleich des ggf. fehlenden feinen Korns und chemischer Additive abgesehen - ausschließlich Bauschutt im Hauptteil.

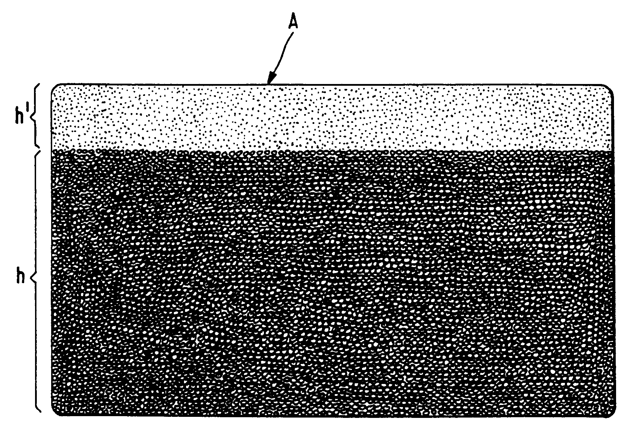

Ein Ausführungsbeispiel der Erfindung wird im folgenden anhand der beigefügten Zeichnung beschrieben. Die Zeichnung zeigt einen Querschnitt durch das Ausführungsbeispiel.

Ein künstlicher Stein dieser Art besteht bis zur Höhe h aus gebrochenem Bauschutt; die darüberliegende Höhe h' besteht aus einer Mischung aus Sand und/oder Splitt. Ein typisches Beispiel für die Höhenmaße ist eine Höhe h = 7,2 cm, h' = 0,8 cm, so daß sich insgesamt eine Höhe des Stein von 8 cm ergibt. In diesem Ausführungsbeispiel beträgt also die Höhe h 90% der Gesamthöhe. Aber auch mit einem höhenmäßig kleineren Teil Bauschutt etwa ab 70% der Gesamthöhe, läßt sich der erfindungsgemäße Stein aufbauen.

Gegenwärtig bereitet die Entsorgung (Deponie) von Bauschutt große Probleme. Im vorliegenden Fall muß der Bauschutt lediglich von Holz, Kunststoffen und Metallen durch Vorsortierung befreit werden. Alle restlichen Bestandteile, gleich welcher Art (Ziegel, Betonstücke, natürliche Steine, Glasscherben, usw.) können belassen werden. Es ist auch nicht notwendig, etwa nur gebrochene Betonstücke zu verwenden. Bauschutt in seiner allgemeinsten Form, sofern er von Holz, Kunststoff und Metallen gereinigt ist, ist verwendbar.

Der Bauschutt wird in einer entsprechenden - dem Stande der Technik bekannten - Brechanlage gebrochen, und zwar derart, daß die Korngröße des anfallenden körnigen Materials vorzugsweise 0 bis 8 mm beträgt. Sofern noch Feinanteile fehlen, mischt man bis zu 8 % (bezogen auf die Gesamtmenge aus Bauschutt und Sand) Natursand mit einer Korngröße von 0 bis 2 mm hinzu. Bei zu hohen Feinanteilen des zur Verfügung stehenden Bauschutts kann es auch erforderlich werden, grobkörnige Anteile zuzumischen, um eine für die geforderten Festigkeitseigenschaften geeignete Mischung zu erhalten. Er dient praktisch zur Ausfüllung der im Bauschutt vorhandenen Hohlräume. Davon abgesehen wird aber das gesamte Material im Bereich h von Bauschutt - d.h. ohne weiteren Zumischungen - gebildet. Es hat sich herausgestellt, daß dieses machbar ist, d.h. daß weitere Zumischungen, etwa von Natursand, für den Erhalt eines festen Steins nicht erforderlich sind.

Auf diese Weise ist es möglich, künstliche Steine mit einer Mindestfestigkeit von 50 kN/cm² zu erreichen. Dies entspricht der nach DIN 18501 für Betonpflastersteine erforderlichen Mindestfestigkeit.

Zu dieser Mischung von Bauschutt und Natursand fügt man Zement hinzu, und zwar im Verhältnis von bspw. 1 : 4,25, sowie ferner Zusatzmittel (z.B. wie unter dem Handelsnamen "Murasan BWA 15" von der Fa. MC-Bauchemie Müller GmbH & Co., 4052 Bottrop, vertrieben). Das dient dazu, die Oberflächenspannung des noch beizumischenden Wasser herabzusetzen, somit als Betonverflüssiger, und ferner auch als Luftporenbildner. Der Zusatz beträgt z.B. 0,2 ml je kg Zement.

Dann wird zu dieser Mischung Wasser hinzugegeben bis zu einem Wasser/Zement-Wert (Verhältnis von Wasser zu Zement) von z.B. 0,35. Diese Mischung wird in die Formen eines Steinfertigers bis zu der gewünschten Höhe, z.B. 90 % eingebracht. Es erfolgt dann mit einem Stempel eine Vorverdichtung.

Danach wird die Höhe h' mit einer weiteren "normalen" Betonmischung aufgefüllt. Diese besteht z.B. aus einer Mischung von Rheinsand mit einer Korngröße von 0 bis 2 mm und Rheinsplitt mit einer Korngröße von 1 bis 3 mm, ebenfalls mit Zement, Zusatzstoffen und Wasser gemischt. Dann erfolgt durch Rütteln der Formen über eine bestimmte Verdichtungszeit (z.B. 4,5 sec) die Verdichtung, anschließend Trocknung.

Auf diese Weise ist sichergestellt, daß der obere Bereich h', einschließlich der Fläche, die nachher sichtbar sein soll, nämlich der Ansichtsfläche A, aus "normalem" Beton, der Untergrund aus nahezu reinem recyceltem Bauschutt hergestellt wird. Damit wird gleichzeitig die Möglichkeit einer verbilligten Herstellung von Betonpflastersteinen, andererseits eine Möglichkeit zum Recyceln von Bauschutt geschaffen.

## Patentansprüche

1. Künstlicher Stein aus verdichtetem, mittels Zement gebundenem, im wesentlichen körnigen Material, **dadurch gekennzeichnet**, daß das Material bis zur Höhe (h) von mindestens 70 % des Steins aus Bauschutt besteht, aus dem Holz, Kunststoffe und Metalle aussortiert sind, und der auf eine Korngröße von bis zu 15 mm gebrochen ist, und daß das Material im Bereich der restlichen Höhe (h') des Steins, einschließlich der Ansichtsfläche (A) keinen Bauschutt enthält.

2. Stein nach Anspruch 1, dadurch gekennzeichnet, daß der Bauschutt bis zu einer Korngröße von 0 bis 8 mm gebrochen ist.

3. Stein nach Anspruch 1, dadurch gekennzeichnet, daß das Material, das aus Bauschutt besteht, bis zu einem Volumenanteil von maximal 8 % mit Natursand zum Ausgleich fehlender Feinanteile angereichert ist und daß sonst nur noch in geringfügiger Menge Zuschlagstoffe als Betonverflüssiger und/oder Porenbildner zugegeben sind.

4. Stein nach Anspruch 1, dadurch gekennzeichnet, daß das Material, das aus Bauschutt besteht, bis zu einem Volumenanteil von maximal 8% mit grobkörnigen Materialien zum Ausgleich zu hoher Feinanteile angereichert ist und daß sonst nur noch in geringfügiger Menge Zuschlagsstoffe als Betonverflüssiger und/oder Porenbinder zugegeben sind.

5. Stein nach Anspruch 1, 2, 3 oder 4, dadurch gekennzeichnet, daß die restliche Höhe (h'), die keinen Bauschutt enthält, aus Material besteht, das Beton in einer Mischung aus Sand mit Splitt, den Sand vorzugsweise in einer Korngröße von 0 bis 2 mm, und den Splitt vorzugsweise in einer Korngröße von 1 bis 3 mm, enthält.

6. Stein nach Anspruch 5, dadurch gekennzeichnet, daß seine Festigkeit mindestens 50 kN/cm² beträgt.

7. Stein nach Anspruch 1 oder einem der folgenden, dadurch gekennzeichnet, daß die Höhe (h), bis zu der Bauschutt verwendet wird, 90 % der Gesamthöhe beträgt.

8. Stein nach Anspruch 7 dadurch gekennzeichnet, daß die Höhe des Bauschuttes 7,2 cm, die restliche Höhe 0,8 cm beträgt.

## Claims

1. Artificial stone consisting of compressed, cement-bound, essentially grained material, **characterized in that** up to a height (h) of the stone of at least 70 %, the material consists of demolition waste crushed to a grain size of 15 mm at the most, from which wood, plastics and metals were selected and that the material contains no demolition waste in the region of the residual height (h') of the stone, including the visible face (A).

2. Stone according to claim 1, characterized in that the demolition waste is crushed to a grain size of 0 to 8 mm.

3. Stone according to claim 1, characterized in that, in order to increase the fine grain portion, the material consisting of demolition waste is enriched with natural sand up to 8 % by volume, and that other additives such as plasticizers and/or blowing agents are added in only minor quanities.

4. Stone according to claim 1, characterized in that, in order to reduce the fine grain portion, the material consisting of demolition waste is enriched with coarse grain up to 8 % by volume, and that other additives such as plasticizers and/or blowing agents are added only in minor quantities.

5. Stone according to at least one of the claims 1 to 4, characterized in that the residual height (h') which does not contain demolition waste, consists of a material which comprises concrete in a mixture of sand with fine gravel, wherein the sand has a grain size of preferably 0 to 2 mm and the fine gravel has a grain size preferably 1 to 3 mm.

6. Stone according to claim 5, characterized in that his compressive strength is at least 50 kN/cm².

7. Stone according to at least one of the claims 1 to 6, characterized in that the height (h) consisting of demolition waste is 90 % of the total height.

8. Stone according to claim 7, characterized in that the height consisting of demolition waste is 7,2 cm and the residual height is 0,8 cm.

## Revendications

1. Pierre artificielle d'une matière essentiellement granulée compactée, liée au moyen de ciment, caractérisée en ce que la matière est constituée, jusqu'à une hauteur (h) d'au moins 70 % de la pierre, de gravats dont on a extrait le bois, les matières plastiques et les métaux et qui sont broyés jusqu'à obtenir une granulométrie inférieure ou égale à 15 mm, et en ce que la matière, au niveau de la hauteur restante (h') de la pierre, y compris la surface visible (A), ne contient pas de gravats.

2. Pierre salon la revendication 1, caracterisée en se que les gravats sont broyés jusqu'à obtenir une granulométrie comprise entra 0 et 8 mm.

3. Pierre selon la revendication 1, caractérisée en ce que la matière constituée de gravats est enrichie, jusqu'à obtenir un rapport volumique de 8 % au maximum, de sable naturel pour compenser le manque de fines et en ce qu'ensuite seule est ajoutée une très faible quantité d'additifs sous forme de fluidifiants du béton et/ou d'aérateurs.

4. Pierre selon la revendication 1, caractérisée en ce que la matière constituée de gravats est enrichie en granulats grossiers jusqu'à un pourcentage volumique de 8 % au maximum pour compenser l'excès de fines et en ce qu'ensuite seule est ajoutée une très faible quantité d'additifs sous forme de fluidifiants et/ou d'aérateurs.

5. Pierre selon la revendication 1, 2, 3 ou 4, caractérisée en ce que la hauteur restante (h'), qui ne contient aucun gravats, est constituée d'une matière qui contient du béton à base de sable et de gravillons, le sable ayant une granulométrie comprise de préférence entre 0 et 2 mm et les gravillons une granulométrie comprise de préférence entre 1 et 3 mm.

6. Pierre selon la revendication 5, caractérisée en ce que sa résistance est d'au moins 50 kN/cm².

7. Pierre selon la revendication 1 ou l'une quelconque des revendications précédentes, caractérisée en ce que la hauteur (h) jusqu'à laquelle on utilise des gravats est égale à 90 % de la hauteur totale.

8. Pierre selon la revendication 7, caractérisée en ce que la hauteur des gravats est égale à 7,2 cm et la hauteur restante à 0,8 cm.
